Europäisches Patentamt

European Patent Office

Office européen des brevets

(19)

(11) **EP 0 981 910 B1**

(12) ## EUROPÄISCHE PATENTSCHRIFT

(45) Veröffentlichungstag und Bekanntmachung des Hinweises auf die Patenterteilung:
**14.11.2001 Patentblatt 2001/46**

(51) Int Cl.[7]: **H04N 7/36**

(21) Anmeldenummer: **98931987.6**

(22) Anmeldetag: **23.04.1998**

(86) Internationale Anmeldenummer:
**PCT/DE98/01137**

(87) Internationale Veröffentlichungsnummer:
**WO 98/51086 (12.11.1998 Gazette 1998/45)**

(54) **VERFAHREN UND VORRICHTUNG ZUR CODIERUNG EINES DIGITALISIERTEN BILDES**

METHOD AND DEVICE FOR CODING A DIGITIZED IMAGE

PROCEDE ET DISPOSITIF DE CODAGE D'UNE IMAGE NUMERISEE

(84) Benannte Vertragsstaaten:
**DE FR GB IT NL SE**

(30) Priorität: **07.05.1997 DE 19719471**

(43) Veröffentlichungstag der Anmeldung:
**01.03.2000 Patentblatt 2000/09**

(73) Patentinhaber: **Infineon Technologies AG**
**81669 München (DE)**

(72) Erfinder:
- **PANDEL, Jürgen**
  **D-83620 Feldkirchen-Westerham (DE)**
- **SALAI, Albert**
  **D-80469 München (DE)**

(74) Vertreter: **Reinhard - Skuhra - Weise & Partner**
**Postfach 44 01 51**
**80750 München (DE)**

(56) Entgegenhaltungen:
**EP-A- 0 624 981       WO-A-96/38006**

- **"ACTIVITY DETECTION" IBM TECHNICAL DISCLOSURE BULLETIN, Bd. 34, Nr. 7B, 1. Dezember 1991, Seiten 217-219, XP000282558**
- **SUN H ET AL: "MOTION-COMPENSATED VECTOR QUANTIZATION WITH A DYNAMIC CODEBOOK" PROCEEDINGS OF THE INTERNATIONAL SYMPOSIUM ON CIRCUITS AND SYSTEMS, NEW ORLEANS, MAY 1 - 3, 1990, Bd. 2, Nr. CONF. 23, 1. Mai 1990, Seiten 1003-1006, XP000166985 INSTITUTE OF ELECTRICAL AND ELECTRONICS ENGINEERS**
- **SOHAIL ZAFAR ET AL: "PREDICTIVE BLOCK-MATCHING MOTION ESTIMATION SCHEMES FOR VIDEO COMPRESSION PART I INTER-BLOCK PREDICTION" PROCEEDINGS OF SOUTHEASTCON, WILLIAMSBURG, APR. 7 - 10, 1991, Bd. 2, 1. Januar 1991, Seiten 1088-1092, XP000287098 INSTITUTE OF ELECTRICAL AND ELECTRONICS ENGINEERS**

**Beschreibung**

Die Erfindung betrifft die Codierung eines Videodatenstroms, insbesondere eines digitalisierten Bildes.

In dem Gebiet der Telekommunikationstechnik, speziell in dem Bereich der Bildverarbeitung, kommt einer effizienten Codierung digitalisierter Bilddaten (Videodatenstrom) eine immer größere Bedeutung zu. Die Codierung der Daten soll so durchgeführt werden, daß eine möglichst große Komprimierung der Information unter möglichst geringem Informationsverlust erreicht wird.

Verschiedene Verfahren zur Codierung eines Videodatenstroms sind bekannt, beispielsweise MPEG [1], [7], [8], JPEG [2], H.261 [3], H.263 [4].

Diese sogenannten blockbasierten Bildcodierverfahren verwenden Prinzipien der Prädiktionscodierung und der Transformationscodierung und Entropiecodierung.

Bei der Prädiktion werden Differenzbilder durch Subtraktion prädizierter Bilddaten von den zu codierenden ursprünglichen Bilddaten erzeugt.

Zur Prädiktion wird eine sogenannte bewegungskompensierte Prädiktion verwendet. Die Grundlagen der hierzu erforderlichen Bewegungsschätzung und ihre Anwendung zur bewegungskompensierten Prädiktion sind dem Fachmann bekannt [5]. Die Bewegungsschätzung erfolgt für einen zu codierenden Bildblock derart, daß Luminanzinformation (Helligkeitsinformation), die jeweils jedem Bildpunkt des Bildes zugeordnet ist, des zu codierenden Bildblock mit Luminanzinformation eines Bereichs der gleichen Form in einem gespeicherten zeitlich vorangegangenen Bild verglichen wird. Der Vergleich erfolgt üblicherweise durch Bildung der absoluten Differenzen der einzelnen Luminanzwerte. Der Vergleich erfolgt für den zu codierenden Bildblock mit mehreren Bereichen des vorangegangenen Bildes, die im weiteren als vorangegangene Bildblöcke bezeichnet werden. Die Differenzbilder enthalten nunmehr nur noch die Differenz der Luminanzwerte des Bildblocks und der Luminanzwerte des bei der Bewegungsschätzung am "besten" übereinstimmenden vorangegangenen Bildblocks.

Die in den Differenzbildern vorhandenen örtlichen Korrelationen zwischen benachbarten Bildpunkten werden mit Hilfe einer geeigneten Transformation, zum Beispiel mit Hilfe der diskreten Cosinustransformation (DCT), ausgenutzt. Die verwendete Transformationscodierung liefert Transformationscodierungskoeffizienten, die einer Quantisierung und einer Entropiecodierung unterzogen werden. Anschließend werden die Transformationscodierungskoeffizienten zu einem Empfänger übertragen, bei dem das gesamte Codierungsverfahren in inverser Weise durchgeführt wird. Dadurch steht beim Empfänger nach Durchführung der Decodierung wieder direkt Information über die Bildpunkte zur Verfügung.

Verfahren zur sogenannten objektbasierten Bildcodierung sind aus [6] bekannt. Bei diesen Verfahren werden ebenso Verfahren zur Bewegungsschätzung und Transformationscodierung eingesetzt.

Bei den im vorigen beschriebenen bekannten Verfahren zur Bildcodierung werden immer alle Differenzbilder einer Transformationscodierung unterzogen. Sind einzelne Blöcke als Ergebnis der Bewegungsschätzung sehr ähnlich, ergibt die zu transformierende Differenz des zu codierenden Bildblocks mit dem korrespondierenden Bildblock des vorangegangenen Bildes sehr kleine Werte, die bei der Quantisierung der Transformationscodierungskoeffizienten unter Umständen zu Null quantisiert werden kann. Zuvor wurden jedoch die Differenzen der Luminanzwerte der einzelnen Bildblöcke bei den bekannten blockbasierten Codierungsverfahren einer Transformationscodierung unterzogen.

Der technische Artikel "ACTIVITY DETECTION", veröffentlicht in "IBM TECHNICAL DISCLOSURE BULLETIN", Bd. 34, Nr. 7B, 1. Dezember 1991, Seiten 217-219, offenbart ein Verfahren, bei dem im Rahmen der Bildcodierung eines Blocks anhand eines Fehlermaßes zwischen Codierungsinformation eines aktuellen Bildsegments und derjenigen eines vorangegangenen Bildsegments überprüft wird, ob ein nicht codierter Block zu einem erheblichen Fehler bei der Rekonstruktion des Bildes unter Verwendung eines bewegungskompensierten Bildblocks des entsprechenden zeitlich vorangegangenen Bildes führen würde. Wenn das Fehlermaß größer als ein Schwellwert ist, wird das entsprechende Bildsegment einer Restfehlercodierung unterzogen.

Der Erfindung liegt das Problem zugrunde, den Aufwand zur Codierung und Decodierung eines Videodatenstroms zu reduzieren.

Das Problem wird mit dem Verfahren gemäß Patentanspruch 1 sowie mit der Vorrichtung gemäß Patentanspruch 14 gelöst.

Das Verfahren gemäß Patentanspruch 1 zur Codierung eines digitalisierten Bildes mit Bildsegmenten, die Bildpunkte aufweisen, denen jeweils Codierungsinformation zugeordnet ist, erfolgt unter Verwendung eines gespeicherten zeitlich vorangegangenen Bildes mit vorangegangenen Bildsegmenten, die vorangegangene Bildpunkte aufweisen, denen jeweils vorangegangene Codierungsinformation zugeordnet ist. Es wird ein vorangegangenes Bildsegment ausgewählt abhängig von einem Startvektor, mit dem eine örtliche Verschiebung des Bildsegments zu dem vorangegangenen Bildsegment angegeben wird. Ein Fehlermaß zwischen Codierungsinformation des Bildsegments und vorangegangener Codierungsinformation des vorangegangenen Bildsegments wird gebildet und es wird überprüft, ob das Fehlermaß kleiner ist als ein erster Schwellenwert. Für den Fall, daß das Fehlermaß kleiner ist als der erste Schwellenwert (S1), wird das Bildsegment keiner Restfehlercodierung unterzogen. Sonst wird das Bildsegment der Restfehlercodierung und einer Entropiecodierung unterzogen.

Unter einem zeitlich vorangegangenen Bild ist das vorangegangene rekonstruierte Bild zu verstehen. Unter einem vorangegangenen Bildsegment und einem vorangegangenen Bildpunkt sind ein Bildsegment bzw. ein Bildpunkt des vorangegangenen Bildes zu verstehen.

Im Rahmen dieses Dokuments ist unter einer Restfehlercodierung eine effiziente Codierung der Differenzbildinformation zu verstehen, z.B. eine DCT-basierte Transformationscodierung, eine Wavelet-Transformationscodierung, eine Quadtree-Codierung, eine fraktale Codierung, eine Vektorquantisierung, eine Differenz Puls-Code-Modulation (DPCM), usw.

Unter Codierungsinformation ist eine einem Bildpunkt zugeordnete Helligkeitsinformation (Luminanzinformation) oder Farbinformation (Chrominanzinformation) zu verstehen.

Die Vorrichtung gemäß Patentanspruch 15 weist eine Prozessoreinheit auf, die derart eingerichtet ist, daß die oben beschriebenen Verfahrensschritte durchgeführt werden.

Die Vorrichtung kann sowohl ein üblicher Computer sein, in dem in Form eines Computerprogramms das oben beschriebene Verfahren gespeichert ist. Sie kann aber auch durch eine spezielle Hardware realisiert sein, die zur Bildcodierung verwendet wird.

Vorteilhafte Weiterbildungen der Erfindung ergeben sich aus den abhängigen Ansprüchen.

Als weiteres Fehlermaß kann mindestens eines der folgenden Kriterien verwendet werden:

- der Unterschied der Farbinformation der Bildpunkte des Bildsegments und der Farbinformation der vorangegangenen Bildpunkte des vorangegangenen Bildsegments,
- der Unterschied der Luminanzinformation der Bildpunkte des Bildsegments und der Luminanzinformation der vorangegangenen Bildpunkte des vorangegangenen Bildsegments,
- eine örtliche Ausdehnung des Unterschieds der Codierungsinformation der Bildpunkte des Bildsegments und der Codierungsinformation der vorangegangenen Bildpunkte des vorangegangenen Bildsegments.

Diese Kriterien zur Bildung des zweiten Fehlermaßes entsprechen verschiedenen Tests hinsichtlich unterschiedlicher Artefakttypen, die durch die bekannten Bildcodierungsverfahren entstehen.

Durch Berücksichtigung der Farbinformation bzw. Luminanzinformation bei dem Vergleich der Bildsegmente wird der Vergleich um ein weiteres Kriterium erweitert und somit das Vergleichsergebnis verbessert.

Durch die weiteren Kriterien der örtlichen Ausdehnung des Unterschieds der Codierungsinformation wird gewährleistet, daß durch das Verfahren möglichst keine subjektive Verschlechterung der Bildqualität eintritt.

Ferner ist es in einer Weiterbildung zur Vereinfachung des Verfahrens und somit zur Einsparung benötigter Rechenkapazität zur Durchführung des Verfahrens vorteilhaft, zur Ermittlung der örtlichen Ausdehnung des Unterschieds mindestens einmal zu überprüfen, ob der Unterschied der Codierungsinformation bei mehr Bildpunkten als eine erste Anzahl größer ist als ein dritter Schwellenwert T1. Das Bildsegment wird der Restfehlercodierung und der Entropiecodierung unterzogen, wenn der Unterschied der Codierungsinformation bei mehr Bildpunkten als der ersten Anzahl größer ist als der dritte Schwellenwert.

Es kann auch in mehreren Schritten überprüft werden, ob der Unterschied der Codierungsinformation bei mehr Bildpunkten als jeweils eine weitere Anzahl größer ist als jeweils ein weiterer Schwellenwert.

Zur Verbesserung der Bildqualität ist es vorteilhaft, mindestens eine der Anzahlen und/oder der Schwellenwerte adaptiv auszugestalten, vorzugsweise abhängig von einem Quantisierungsparameter. Damit wird erreicht, daß bei gröberer Quantisierung auch eine höhere Anzahl an Bildsegmenten nicht einer Bewegungsschätzung, einer Restfehlercodierung und einer Entropiecodierung unterzogen werden müssen und somit weitere Rechenkapazität zur Durchführung des Verfahrens eingespart wird.

Eine weitere Verbesserung der erzielten Ergebnisse wird in einer Weiterbildung dadurch erreicht, daß das Fehlermaß derart ermittelt wird, daß die Unterschiede der Codierungsinformation verschiedener Bildpunkte unterschiedlich gewichtet werden.

Da häufig Artefakte in einem Randgebiet eines Bildsegments auftreten, hat es sich als vorteilhaft herausgestellt, die Gewichtung derart durchzuführen, daß Unterschiede von Bildpunkten, die sich in einem Randgebiet vorgebbarer Größe eines Bildsegments befinden, höher gewichtet werden als Unterschiede von Bildpunkten außerhalb des Randgebiets.

Auch wenn im weiteren in den Ausführungsbeispielen die Erfindung anhand eines blockbasierten Bildcodierungsverfahrens beschrieben wird, so kann sie ohne weiteres auch bei objektbasierten Bildcodierungsverfahren vorteilhaft eingesetzt werden.

Unter einem Bildsegment wird im weiteren eine Menge von Bildpunkten beliebiger Form verstanden, die zusammen gruppiert sind. Bei blockbasierten Bildcodierungsverfahren weisen die Bildsegmente eine rechteckige Form auf, beispielsweise bei dem Verfahren gemäß dem MPEG2-Standard eine quadratische Form, die jeweils 8x8 Bilpunkte (Bildblock) oder 16x16 Bildpunkte (Makroblock) enthalten. Bei blockbasierten Bildcodierungsverfahren werden die Bildsegmente als Bildblöcke bezeichnet.

Im weiteren werden bevorzugte Ausführungsbeispiele der Erfindung anhand von Figuren näher erläutert.

Es zeigen

Figur 1 ein Ablaufdiagramm, in dem die einzelnen Verfahrensschritte des dritten Ausführungsbeispiels dargestellt sind;

Figur 2 eine Tkizze einer Rechneranordnung mit zwei Rechnern, einer Kamera und einem Übertragungsmedium zur Aufnahme, Codierung, Übertragung und Decodierung von Bilddaten;

Figur 3 eine Tkizze eines Bildes mit Bildpunkten, die in Bildblöcke gruppiert sind,

Figur 4 eine symbolische Tkizze der Vorrichtung zur Codierung, anhand der ein erstes Ausführungsbeispiel und ein zweites Ausführungsbeispiel der Erfindung erläutert werden;

Figur 5 eine symbolische Tkizze der Vorrichtung zur Codierung, anhand der ein drittes Ausführungsbeispiel der Erfindung erläutert wird;

Figur 6 ein Ablaufdiagramm, in dem die einzelnen Verfahrensschritte des ersten Ausführungsbeispiels dargestellt sind;

Figur 7 ein Ablaufdiagramm, in dem die einzelnen Verfahrensschritte des zweiten Ausführungsbeispiels dargestellt sind.

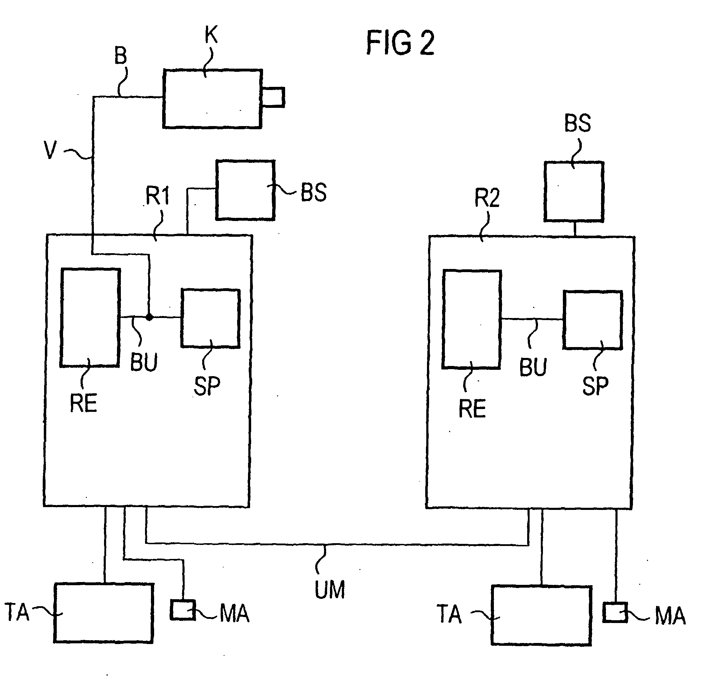

Figur 2 zeigt eine Kamera K, mit der eine Folge von Bildern B aufgenommen wird und einem ersten Rechner R1 über eine Verbindung V zugeführt wird.

In dem ersten Rechner R1 werden die Bilder der Folge von Bildern B digitalisiert und codiert gemäß dem in [1] beschriebenen MPEG2-Verfahren.

Der erste Rechner R1 ist über ein Übertragungsmedium UM, z.B. einem Kabel oder einer Funkübertragungsstrecke, mit einem zweiten Rechner R2 verbunden. Über das Übertragungsmedium UM werden die von dem ersten Rechner R1 codierten Bilddaten an den zweiten Rechner R2 übertragen und dort decodiert.

Der erste Rechner R1 und der zweite Rechner R2 weisen jeweils einen Speicher SP und eine Prozessoreinheit RE auf, die über einen Bus BU miteinander verbunden sind. Die Prozessoreinheit RE des ersten Rechners R1 ist derart ausgestaltet, daß die im weiteren erläuterten Verfahrensschritte zur Codierung der digitalisierten Bilder durchgeführt werden. Die Prozessoreinheit RE des zweiten Rechners R2 ist derart ausgestaltet, daß die empfangenen codierten Daten decodiert werden entsprechend dem MPEG2-Verfahren. Der erste Rechner R1 und der zweite Rechner R2 weisen ferner jeweils einen Bildschirm BS zur Darstellung der Bilder B sowie eine Tastatur TA und eine Maus MA zur Steuerung der Rechner R1, R2 auf.

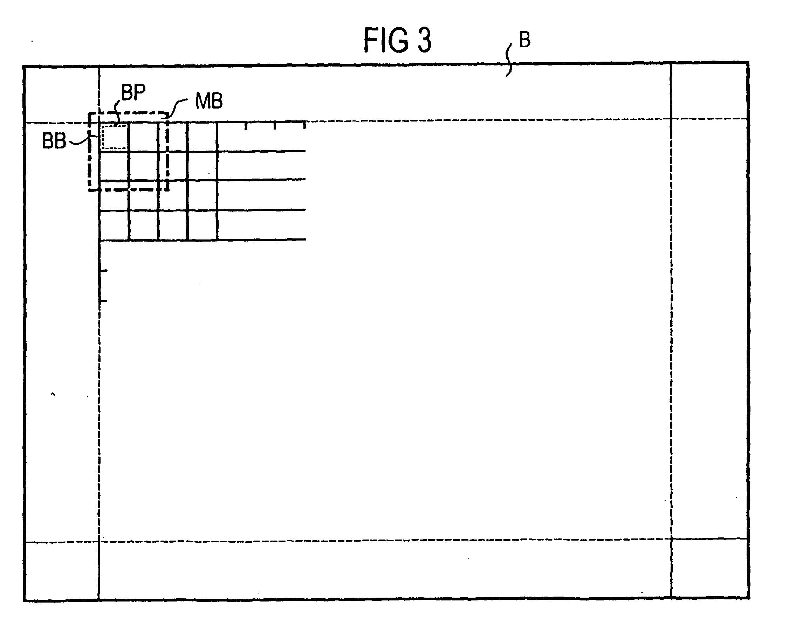

Für allle Ausführungsbeispiele gilt, daß die Bilder B in dem ersten Rechner R1 digitalisiert werden. Die digitalisierten Bilder B weisen Bildpunkte BP auf (vgl. Figur 3), denen Luminanzinformation (Helligkeitsinformation) und/oder Farbinformation (Chrominanzinformation) zugeordnet ist.

Die Bildpunkte BP werden in Bildblöcke BB gruppiert. Bei dem Verfahren gemäß dem MPEG2-Standard werden jeweils vier benachbarte Bildblöcke BB, mit Bildpunkten BP, denen Helligkeitsinformation zugeordnet ist, und zwei Bildblöcke BB mit Farbinformation, zu einem Makroblock MB gruppiert.

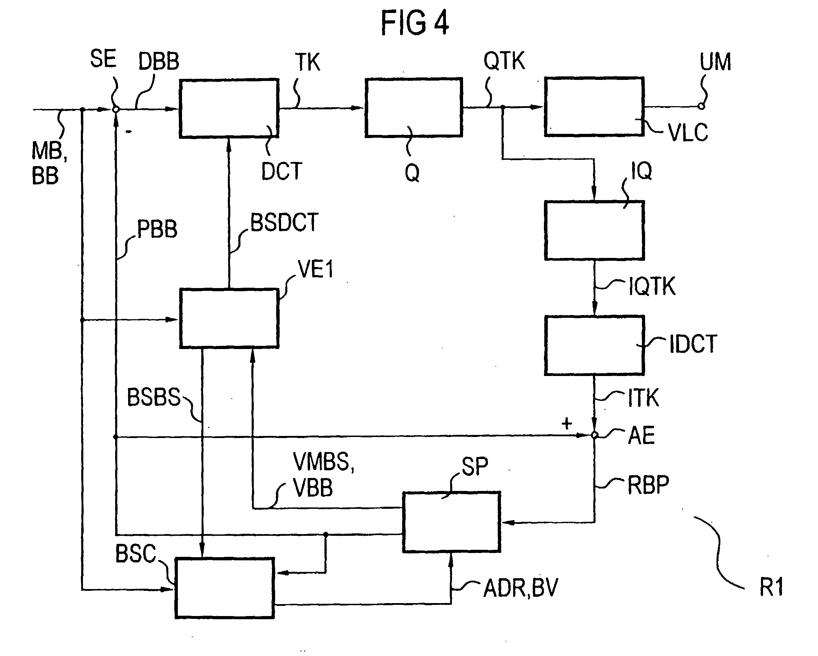

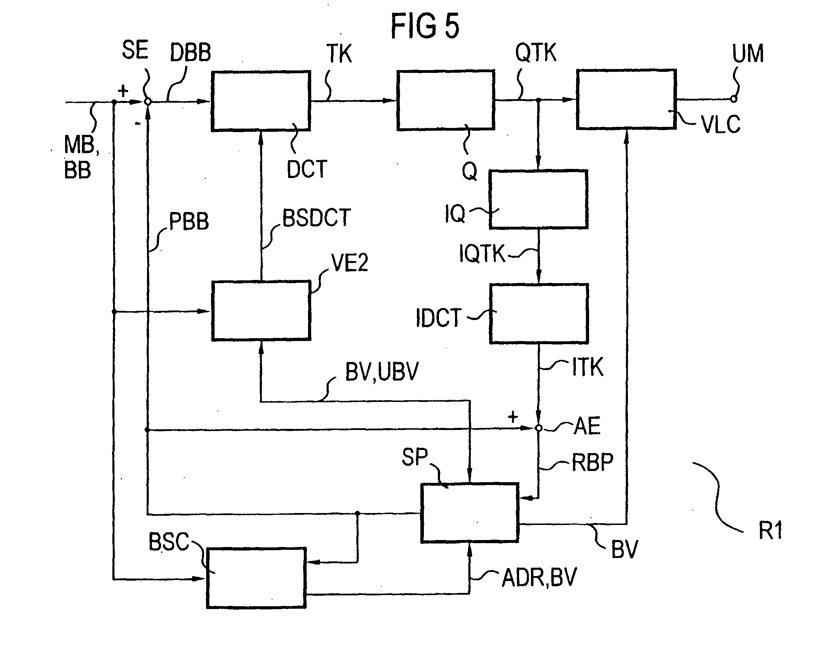

Auch die grundlegenden Verfahrensschritte zur Codierung des Bildes B sind allen Ausführungsbeispielen gemein. Sie werden anhand einer symbolischen Tkizze der Vorrichtung zur Codierung erläutert (vgl. Figur 4 und 5)

Jeweils ein Bildblock BB wird einer Subtraktionseinheit SE zugeführt. In der Subtraktionseinheit SE wird von der Codierungsinformation der Bildpunkte BP des Bildblocks BB Codierungsinformation von Bildpunkten eines im weiteren erläuterten prädizierten Bildblocks PBB abgezogen.

Ein sich durch die Differenzbildung ergebender Differenzbildblock DBB wird einer Einheit zur Transformationscodierung DCT zugeführt, in der auf den Differenzbildblock DBB eine diskrete Cosinus Transformation (DCT) zur Bildung von Transformationskoeffizienten TK angewendet wird. Die Transformationskoeffizienten TK werden in einer Quantisierungseinheit Q quantisiert QTK. Die qüantisierten Transformationskoeffizienten QTK werden einer Einheit zur Entropiecodierung VLC zugeführt, in der eine sog. Run Length Codierung und/oder eine sog. variable Längencodierung (Variable Length Coding) durchgeführt wird.

Bei der Codierung werden die quantisierten Transformationskoeffizienten QTK ferner einer Einheit zur inversen Quantisierung IQ zugeführt, in der invers quantisierte Transformationskoeffizienten IQTK gebildet werden.

In einer Einheit zur inversen Transformationscodierung IDCT werden die ihr zugeführten invers quantisierten Transformationskoeffizienten IQTK invers transformiert. Es ergeben sich inverse Transformationskoeffizienten ITK, die einer Additionseinheit AE zugeführt werden.

Der Additionseinheit AE wird ferner der prädizierte Bildblock PBB zugeführt. Der prädizierte Bildblock PBB enthält prädizierte Codierungsinformation, die zu den inversen Transformationskoeffizienten ITK addiert werden. Sich daraus ergebende rekonstruierte Bildpunkte RBP bilden das rekonstruierte Bild und werden in einem Speicher SP gespeichert.

In dem Speicher SP wird jeweils mindestens ein zeitlich vorangegangenes rekonstruiertes Bild gespeichert. Das vorangegangene Bild weist vorangegangene Bildblöcke mit den rekonstruierten Bildpunkte RBP auf, die vorangegangene Codierungsinformation vorangegangener Bildpunkte BP des vorangegangenen Bildes repräsentieren.

Das in dem Speicher SP gespeicherte Bild wird für eine Bewegungsschätzung, die in einer Einheit zur Bewegungsschätzung BSC durchgeführt wird, verwendet.

Die Bewegungsschätzung BSC erfolgt derart, daß für die Bildpunkte BP jeweils eines Makroblocks MB und/ oder eines Bildblocks BB ein Vergleich der Codierungsinformation mit Codierungsinformation von Bildpunkten BP des vorangegangenen Bildes durchgeführt wird. In dem vorangegangenen Bild werden jeweils vorangegangene Bildpunkte verwendet, die in einen vorangegangenen Bildblock VBB bzw. vorangegangenen Makroblock VMB gruppiert werden.

Für den Bildblock BB bzw. den Makroblock MB wird eine Summe absoluter Differenzen der Codierungsinformation der Bildpunkte BP, die in dem Bildblock BB bzw. in dem Makroblock MB enthalten sind, mit Codierungsinformation von Bildpunkten eines Gebiets in dem vorangegangenen Bild, welches die gleiche Form aufweist wie der Bildblock BB bzw. der Makroblock MB, gebildet. Die Summe absoluter Differenzen wird im weiteren als Fehlermaß bezeichnet.

Im weiteren wird das Verfahren zur einfacheren Darstellung für einen Makroblock MB (16x16 Bildpunkte BP) erläutert. Für einen Bildblock BB sind die Schritte entsprechend durchzuführen, jedoch mit 8x8 Bildpunkten BP in dem Bildblock BB.

Das Fehlermaß wird für einen Makroblock MB nach folgender Vorschrift gebildet:

$$F = \sum_{i=1}^{16} \sum_{j=1}^{16} \left| x_{ij} - y_{ij} \right|, \tag{1}$$

wobei mit

- i ein Zeilenindex zur eindeutigen Kennzeichnung einer Zeile innerhalb des Makroblocks MB,
- j ein Spaltenindex zur eindeutigen Kennzeichnung einer Spalte innerhalb des Makroblocks MB,
- $x_{ij}$ ein Wert der Codierungsinformation, der einem sich an der durch i, j angegebenen Position befindenden Bildpunkt BP innerhalb des Makroblocks MB zugeordnet ist,
- $y_{ij}$ ein Wert der Codierungsinformation, der einem sich an der durch i, j angegebenen Position befindenden vorangegangenen Bildpunkt BP innerhalb des Gebiets des vorangegangenen Bildes, das mit dem Makroblock MB verglichen wird, zugeordnet ist,

bezeichnet wird.

Das Fehlermaß wird für eine vorgebbare Anzahl von Gebieten innerhalb des vorangegangenen Bildes, dem sog. Suchbereich, gebildet.

Als Ergebnis der Bewegungsschätzung BSC wird das Gebiet des vorangegangenen Bildes B als prädizierter Bildblock PBB ausgewählt, für das das Fehlermaß minimal ist, da für dieses Gebiet die Übereinstimmung mit dem Bildblock BB optimal ist.

Ferner wird im Rahmen der Bewegungsschätzung die örtliche Verschiebung des Bildblocks BB zu dem prädizierten Bildblock PBB in dem vorangegangenen Bild ermittelt. Die Verschiebung wird im weiteren als Bewegungsvektor BV bezeichnet.

Im Rahmen der Bewegungsschätzung BSC wird jeweils zur eindeutigen Adressierung des Gebiets des vorangegangenen Bildes eine ADR dem Speicher SP zugeführt.

Der Bewegungsvektor BV wird nach vollendeter Bewegungsschätzung BSC in dem Speicher SP gespeichert.

Die Codierungsinformation der Bildpunkte des prädizierten Bildblocks PBB wird der Subtraktionseinheit SE zugeführt und von der Codierungsinformation der Bildpunkte BP des Makroblocks MB bzw. des Bildblocks BB abgezogen.

**1. Ausführungsbeispiel:**

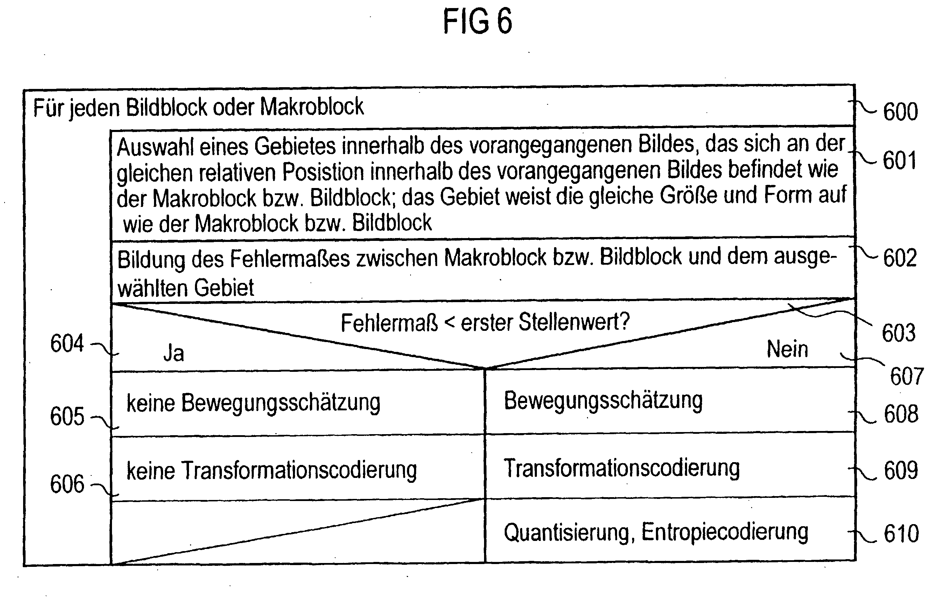

Bei dem ersten Ausführungsbeispiel, das in seinen Verfahrensschritten in Figur 6 dargestellt ist, wird das oben beschriebene Verfahren mit folgenden Erweiterungen durchgeführt.

Für jeden Makroblock MB bzw. jeden Bildblock BB (600) wird ein Gebiet in dem gespeicherten vorangegangenen Bild ausgewählt (Schritt 601), das sich an der relativen gleichen Position innerhalb des vorangegangenen Bildes befindet wie der Makroblock MB bzw. der Bildblock BB innerhalb des digitalisierten Bildes B. Dies bedeutet, daß ein ausgewählter Startvektor, mit dem eine örtliche Verschiebung des Bildsegments zu dem Gebiet angegeben wird, ein Nullvektor ist.

Das ausgewählte Gebiet weist die gleiche Form und Größe auf wie der Makroblock MB (16x16 Bildpunkte) bzw. der Bildblock BB (8x8 Bildpunkte). Das ausgewählte Gebiet wird im weiteren als vorangegangener Makroblock VMB bzw. als vorangegangener Bildblock VBB bezeichnet.

Der vorangegangene Makroblock VMB bzw. der vorangegangene Bildblock VBB und der Makroblock MB bzw. der Bildblock BB werden einer ersten Vergleichseinheit VE1 (vgl. Figur 4) zugeführt, in der das oben beschriebene Fehlermaß F gebildet wird (Schritt 602).

In einem dritten Schritt 603 wird überprüft, ob das Fehlermaß F kleiner ist als ein vorgebbarer erster Schwellenwert S1 (F < S1 ?).

Ist das Fehlermaß F kleiner ist als der erste Schwellenwert S1 (604), so wird von der ersten Vergleichseinheit VE1 ein Signal BSBS gebildet und der Einheit zur Bewegungsschätzung BSC zugeführt, mit dem angegeben wird, daß für den Makroblock MB bzw. den Bildblock BB keine Bewegungsschätzung durchgeführt wird. Weiterhin wird von der ersten Vergleichseinheit VE1 ein weiteres Signal BSDCT gebildet und der Einheit zur Transformationscodierung DCT zugeführt, mit dem angegeben wird, daß für den Makroblock MB bzw. den Bildblock BB keine Transformationscodierung DCT durchgeführt wird. Mit anderen Worten bedeutet dieser Fall, daß bei einer ausreichend guten Übereinstimmung zwischen dem Makroblock MB bzw. dem Bildblock BB und dem vorangegangenen Makroblock VMB bzw. dem vorangegangenen Bildblock VBB keine Bewegungsschätzung BSC (605) und keine Transformationscodierung DCT (606) erfolgt.

Ist das Fehlermaß F nicht kleiner ist als der erste Schwellenwert S1 (607), so wird die oben erläuterte Bewegungsschätzung BSC (608) und Transformationscodierung DCT (609), Quantisierung und Entropiecodierung (610) durchgeführt.

Durch dieses Vorgehen wird eine erhebliche Einsparung an benötigter Rechenzeit zur Codierung erreicht.

## 2. Ausführungsbeispiel:

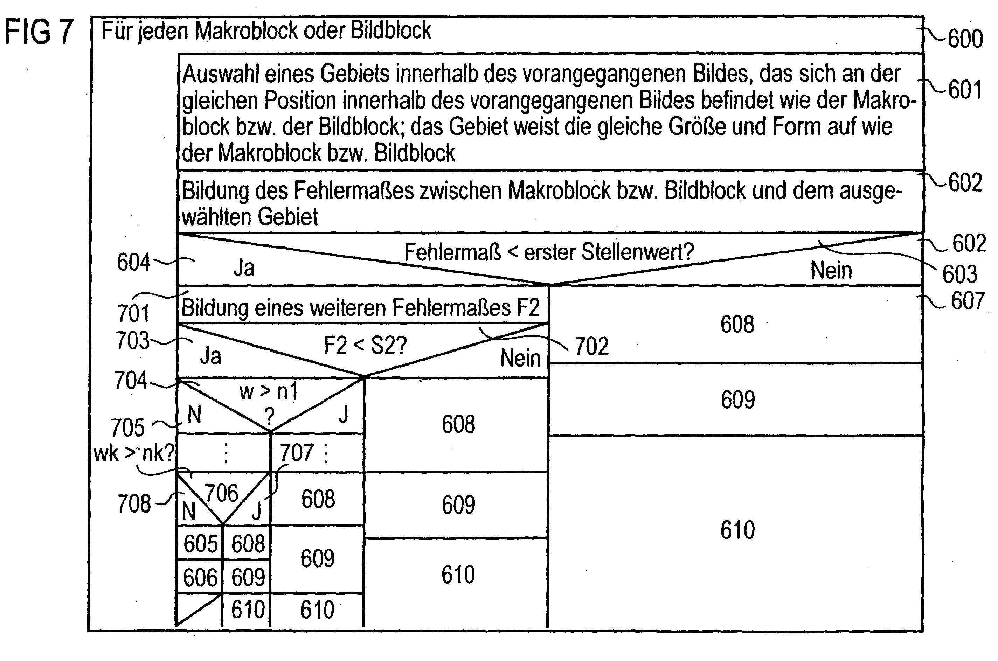

Das zweite Ausführungsbeispiel, welches in seinen Schritten in Figur 7 dargestellt ist, unterscheidet sich nur in einigen zusätzlichen Schritten von dem ersten Ausführungsbeispiel.

Für jeden Makroblock MB bzw. jeden Bildblock BB (600) wird ebenfalls ein Gebiet in dem gespeicherten vorangegangenen Bild ausgewählt (Schritt 601), das sich an der relativen gleichen Position innerhalb des vorangegangenen Bildes befindet wie der Makroblock MB bzw. der Bildblock BB innerhalb des digitalisierten Bildes B. Das ausgewählte Gebiet weist die gleiche Form und Größe auf wie der Mäkroblock MB (16x16 Bildpunkte) bzw. der Bildblock BB (8x8 Bildpunkte). Das ausgewählte Gebiet wird im weiteren als vorangegangener Makroblock VMB bzw. als vorangegangener Bildblock VBB bezeichnet.

Der vorangegangene Makroblock VMB bzw. der vorangegangene Bildblock VBB und der Makroblock MB bzw. der Bildblock BB werden der ersten Vergleichseinheit VE1 (vgl. Figur 4) zugeführt, in der das oben beschriebene Fehlermaß F gebildet wird (Schritt 602).

In einem dritten Schritt 603 wird überprüft, ob das Fehlermaß F kleiner ist als ein vorgebbarer erster Schwellenwert S1 (F < S1 ?).

Ist das Fehlermaß F kleiner ist als der erste Schwellenwert S1 (604), so werden folgende weiteren Schritte durchgeführt.

Es wird mindestens ein weiteres Fehlermaß F2 in der ersten Vergleichseinheit VE1 für den Makroblock MB bzw. den Bildblock BB gebildet (Schritt 701).

Das mindestens eine weitere Fehlermaß F2 beschreibt anschaulich die Abweichung des Makroblocks MB bzw. des Bildblocks BB von dem vorangegangenen Makroblock VMB bzw. dem vorangegangenen Bildblock VBB hinsichtlich verschiedener Aspekte, die zu weiteren Artefakten bei der Decodierung des codierten Bildes führen können.

Als weiteres Fehlermaß wird die Übereinstimmung der jeweils anderen Codierungsinformation der Bildpunkte BP des Makroblocks MB bzw. Bildblocks BB mit den Farbwerten der Bildpunkte BP des vorangegangenen Makroblocks MB bzw. vorangegangenen Bildblocks BB verwendet. Dies bedeutet für den Fall, daß für die Bildung des Fehlermaßes F Luminanzinformation verwendet wird, Chrominanzinformation für die Bildung des weiteren Fehlermaßes F2 verwendet wird, und umgekehrt.

Die Bildung des weiteren Fehlermaßes erfolgt wiederum durch Bildung der Summe der Absolutwerte der Differenzen der Codierungsinformation.

Ist das zweite Fehlermaß kleiner als ein vorgebbarer zweiter Schwellenwert (Schritt 702, 703), so wird ferner überprüft, ob der Unterschied der Codierungsinformation (Luminanzinformation und/oder Farbinformation) bei mehr Bildpunkten als eine erste Anzahl n1 größer ist als ein dritter Schwellenwert T1 (Schritt 704). Mit anderen Worten bedeutet dies, daß die Zahl w derjenigen Bildpunkte ermittelt wird, bei denen die Codierungsinformation größer ist als der dritte Schwellenwert T1. Ist die Zahl größer als die erste Anzahl n1, so muß der Makroblock MB bzw. Bildblock BB codiert werden.

Ist dies nicht der Fall (Schritt 705), so wird ferner in einer vorgebbaren Anzahl weiterer Prüfungsschritten (706) überprüft, ob der Unterschied der Codierungsinformation bei mehr Bildpunkten als jeweils eine weitere Anzahl nk (k = 2 ... m, m ∈ N+\{1}) größer ist als jeweils ein weiterer Schwellenwert Tk. Es gilt jeweils (nk+1 < nk) und (Tk+1 > Tk).

Der Makroblock MB bzw. Bildblock BB wird immer dann codiert bzw. es wird eine Bewegungsschätzung für den Makroblock MB bzw. Bildblock BB durchgeführt, wenn die Zahl wk der Bildpunkte, bei denen die Codierungsinformation größer ist als der weitere Schwellenwert Tk, größer ist als die weitere Anzahl nk (707).

Ist jedoch die Zahl wk der Bildpunkte, bei denen die Codierungsinformation größer ist als der weitere Schwellenwert Tk nicht größer als die weitere Anzahl nk (708), so wird von der ersten Vergleichseinheit VE1 das Signal BSBS gebildet und der Einheit zur Bewegungsschätzung BSC zugeführt, mit dem angegeben wird, daß für den Makroblock MB bzw. den Bildblock BB keine Bewegungsschätzung durchgeführt wird. Weiterhin wird von der ersten Vergleichseinheit VE1 das weitere Signal BSDCT gebildet und der Einheit zur Transformationscodierung DCT zugeführt, mit dem angegeben wird, daß für den Makroblock MB bzw. den Bildblock BB keine Transformationscodierung DCT durchgeführt wird. Mit anderen Worten bedeutet dieser Fall, daß bei einer ausreichend guten Übereinstimmung zwischen dem Makroblock MB bzw. dem Bildblock BB und dem vorangegangenen Makroblock VMB bzw. dem vorangegangenen Bildblock VBB keine Bewegungsschätzung BSC (605) und keine Transformationscodierung DCT (606) erfolgt.

Für alle anderen Fälle wird die oben erläuterte Bewegungsschätzung BSC (608) und Transformationscodierung DCT (609), Quantisierung und Entropiecodierung (610) durchgeführt.

### 3. Ausführungsbeispiel:

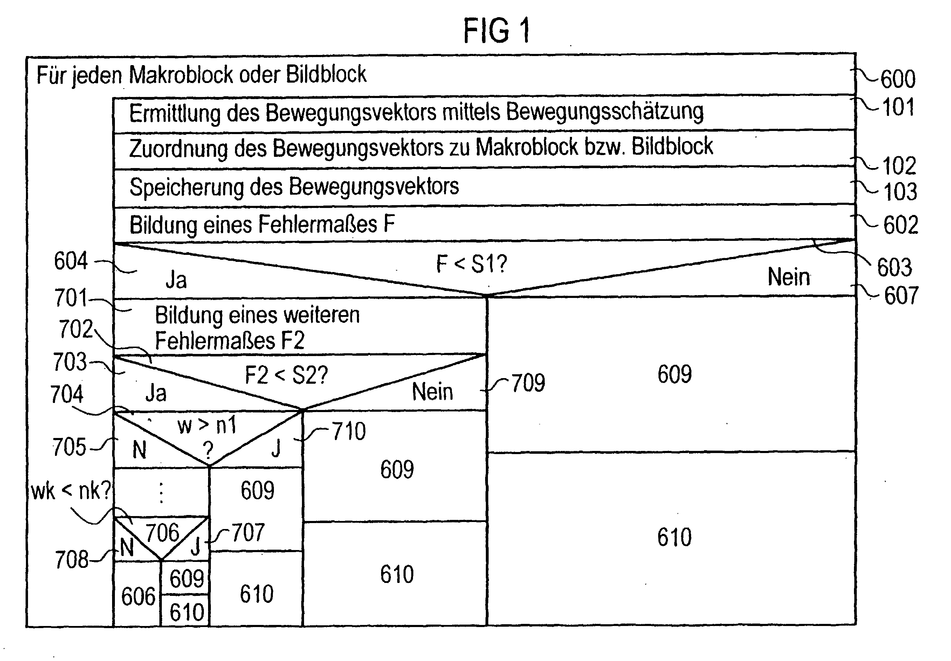

Bei dem dritten Ausführungsbeispiel, das in Figur 5 bzw. in seinem Ablauf in Figur 1 dargestellt ist, wird für jeden Makroblock MB bzw. Bildblock BB eine Bewegungsschätzung BSC zur Ermittlung eines Bewegungsvektors BV durchgeführt (Schritt 101). Der Bewegungsvektor BV wird dem Makroblock MB bzw. Bildblock BB zugeordnet (Schritt 102) und in dem Speicher SP gespeichert (Schritt 103).

Figur 5 zeigt eine zweite Vergleichseinheit VE2, die derart eingerichtet ist, daß folgende Verfahrensschritte durchgeführt werden.

Der zweiten Vergleichseinheit VE2 werden der Makroblock MB bzw. Bildblock BB sowie der vorangegangene Makroblock VMB bzw. der vorangegangene Bildblock VBB zugeführt.

Es wird mindestens das Fehlermaß F in der zweiten Vergleichseinheit VE2 für den Makroblock MB bzw. den Bildblock BB gebildet (Schritt 701).

Es wird ferner das weitere Fehlermaß F2 für den Makroblock MB bzw. den Bildblock BB gebildet.

Als weiteres Fehlermaß F2 wird die Übereinstimmung der Codierungsinformation der Bildpunkte BP des Makroblocks MB bzw. Bildblocks BB mit der Codierungsinformation der Bildpunkte BP des vorangegangenen Makroblocks MB bzw. vorangegangenen Bildblocks BB verwendet. Dies erfolgt durch Bildung der Summe der Absolutwerte der Differenzen der Farbwerte.

Ist das weitere Fehlermaß F2 kleiner als ein vorgebbarer zweiter Schwellenwert S2 (Schritt 702, 703), so wird ferner überprüft, ob der Unterschied der Codierungsinformation (Luminanzinformation und/oder Farbinformation) bei mehr Bildpunkten als eine erste Anzahl n1 größer ist als ein dritter Schwellenwert T1 (Schritt 704). Mit anderen Worten bedeutet dies, daß die Zahl w derjenigen Bildpunkte ermittelt wird, bei denen die Codierungsinformation größer ist als der dritte Schwellenwert T1. Ist die Zahl größer als die erste Anzahl n1, so muß der Makroblock MB bzw. Bildblock BB codiert werden.

Ist dies nicht der Fall (Schritt 705), so wird ferner in einer vorgebbaren Anzahl weiterer Prüfungsschritten (706) überprüft, ob der Unterschied der Codierungsinformation bei mehr Bildpunkten als jeweils eine weitere Anzahl nk (k = 1 ... m, m ∈ N+\{1}) größer ist als jeweils ein weiterer Schwellenwert Tk. Es gilt jeweils (nk+1 < nk) und (Tk+1 > Tk).

Der Makroblock MB bzw. Bildblock BB wird immer dann codiert, wenn die Zahl wk der Bildpunkte, bei denen die Codierungsinformation größer ist als der weitere Schwellenwert Tk größer ist als die weitere Anzahl nk (707).

Ist jedoch die Zahl wk der Bildpunkte, bei denen die Codierungsinformation größer ist als der weitere Schwellenwert Tk nicht größer als die weitere Anzahl nk (708), so wird von der zweiten Vergleichseinheit VE2 das weitere Signal BSDCT gebildet und der Einheit zur Transformationscodierung DCT zugeführt, mit dem angegeben wird, daß für den Makroblock MB bzw. den Bildblock BB keine Transformationscodierung DCT durchgeführt wird.

Mit anderen Worten bedeutet dieser Fall, daß bei einer ausreichend guten Übereinstimmung zwischen dem Makroblock MB bzw. dem Bildblock BB und dem vorangegangenen Makroblock VMB bzw. dem vorangegangenen Bildblock VBB keine Transformationscodierung DCT (606) erfolgt. Es wird nur der Bewegungsvektor BV selbst der Einheit zur Entropiecodierung VLC zugeführt und dort entropiecodiert. Von der zweiten Vergleichseinheit VE2 wird in diesem Fall das weitere Signal BSDCT gebildet und der Einheit zur Transformationscodierung DCT zugeführt, mit dem angegeben wird, daß für den Makroblock MB bzw. den Bildblock BB keine Transformationscodierung DCT durchgeführt wird.

Für alle anderen Fälle (709, 710) wird die oben erläuterte Transformationscodierung DCT (609), Quantisierung und Entropiecodierung (610) für den Makroblock MB bzw. den Bildblock BB durchgeführt.

Im weiteren werden einige Alternativen zu den oben beschriebenen Ausführungsbeispielen aufgezeigt.

Im Rahmen der Erfindung kann jedes blockbasierte Bildcodierungsverfahren eingesetzt werden, das eine Bewegungsschätzung und eine Transformationscodierung verwendet, z.B. MPEG1, das Verfahren gemäß dem H. 261-Standard oder das Verfahren gemäß dem H.263-Standard.

Die Erfindung ist ferner ohne weiteres auch bei objektbasierten Bildcodierungsverfahren vorteilhaft anwendbar, wobei in diesem Fall die Bildsegmente eine beliebige Form aufweisen.

Das Fehlermaß kann auch auf andere Weise gebildet werden, z.B. durch Bildung der Summe der einer beliebigen Norm der Differenz der Luminanzwerte.

Alle Schwellenwerte und/oder Anzahlen nk können apativ ausgestaltet sein. Es ist vorteilhaft, die Schwellenwerte apativ abhängig von einem Quantisierungsparameter, mit dem die Quantisierung charakterisier wird, auszugestalten.

Es hat sich als vorteilhaft erwiesen, zur Bildung des Fehlermaßes F bzw. des weiteren Fehlermaßes F2 Differenzen von Bildpunkten in einem Randgebiet des Makroblocks MB bzw. Bildblocks BB höher zu gewichten als Differenzen von Bildpunkten außerhalb des Randgebiets.

Das Fehlermaß F bzw. weitere Fehlermaßes F2 ergibt sich allgemein nach folgender Vorschrift:

$$F, F2 = \sum_{i=1}^{16} \sum_{j=1}^{16} |x_{ij} - y_{ij}| \cdot \alpha_{ij}$$

wobei mit $\alpha_{ij}$ Elemente einer Gewichtsmatrix ($\alpha_{ij}$) bezeichnet wird.

Für die Gewichtsmatrix ($\alpha_{ij}$) hat sich folgende beispielhaft dargestellte Struktur als vorteilhaft erwiesen:

$$
(\alpha_{ij}) = \begin{bmatrix}
\alpha_{1,1} & \alpha_{1,2} & \alpha_{1,3} & \alpha_{1,4} & \cdots & \alpha_{1,13} & \alpha_{1,14} & \alpha_{1,15} & \alpha_{1,16} \\
\alpha_{2,1} & \alpha_{2,2} & \alpha_{2,3} & \alpha_{2,4} & \cdots & \alpha_{2,13} & \alpha_{2,14} & \alpha_{2,15} & \alpha_{2,16} \\
\alpha_{3,1} & \alpha_{3,2} & \alpha_{3,3} & \alpha_{3,4} & \cdots & \alpha_{3,13} & \alpha_{3,14} & \alpha_{3,15} & \alpha_{3,16} \\
\alpha_{4,1} & \alpha_{4,2} & \alpha_{4,3} & \alpha_{4,4} & \cdots & \alpha_{4,13} & \alpha_{4,14} & \alpha_{4,15} & \alpha_{4,16} \\
\vdots & \vdots & \vdots & \vdots & \ddots & \vdots & \vdots & \vdots & \vdots \\
\alpha_{13,1} & \alpha_{13,2} & \alpha_{13,3} & \alpha_{13,4} & \cdots & \alpha_{13,13} & \alpha_{13,14} & \alpha_{13,15} & \alpha_{13,16} \\
\alpha_{14,1} & \alpha_{14,2} & \alpha_{14,3} & \alpha_{14,4} & \cdots & \alpha_{14,13} & \alpha_{14,14} & \alpha_{14,15} & \alpha_{14,16} \\
\alpha_{15,1} & \alpha_{15,2} & \alpha_{15,3} & \alpha_{15,4} & \cdots & \alpha_{15,13} & \alpha_{15,14} & \alpha_{15,15} & \alpha_{15,16} \\
\alpha_{16,1} & \alpha_{16,2} & \alpha_{16,3} & \alpha_{16,4} & \cdots & \alpha_{16,13} & \alpha_{16,14} & \alpha_{16,15} & \alpha_{16,16}
\end{bmatrix}
$$

Es hat sich als vorteilhaft erwiesen, denjenigen $\alpha_{ij}$, die sich in der Nähe des Randes der Gewichtsmatrix ($\alpha_{ij}$) befinden, einen größeren Werte zuzuweisen, als denen, die sich im Zentrum der Gewichtsmatrix ($\alpha_{ij}$) befinden.

Der Wert 10 für den Randbereich und der Wert 1 für das Zentrum haben sich als vorteilhaft erwiesen.

Damit ergibt sich für die Gewichtsmatrix ($\alpha_{ij}$) folgende Struktur:

$$\left(\alpha_{ij}\right) = \begin{bmatrix} 10 & 10 & 10 & 10 & \cdots & 10 & 10 & 10 & 10 \\ 10 & 10 & 10 & 10 & \cdots & 10 & 10 & 10 & 10 \\ 10 & 10 & 10 & 1 & \cdots & 1 & 10 & 10 & 10 \\ 10 & 10 & 1 & 1 & \cdots & 1 & 1 & 10 & 10 \\ \vdots & \vdots & \vdots & \vdots & \ddots & \vdots & \vdots & \vdots & \vdots \\ 10 & 10 & 1 & 1 & \cdots & 1 & 1 & 10 & 10 \\ 10 & 10 & 10 & 1 & \cdots & 1 & 10 & 10 & 10 \\ 10 & 10 & 10 & 10 & \cdots & 10 & 10 & 10 & 10 \\ 10 & 10 & 10 & 10 & \cdots & 10 & 10 & 10 & 10 \end{bmatrix}$$

Die Größe des Randgebiets hat sich mit jeweils 2 Spalten bzw. Zeilen am Rand des Makroblocks MB bzw. Bildblocks BB als ausreichend erwiesen.

Als Startvektor kann ferner auch ein durch eine Prädiktion ermittelter prädizierter Vektor verwendet werden.

Im Rahmen dieses Dokuments wurden folgende Veröffentlichungen zitiert:

[1] D. Le.Gall, The Video Compression Standard for Multimedia Applications, Communications of the ACM, Vol. 34, No. 4, S. 47-58, April 1991, 1991).

[2] G. Wallace, The JPEG Still Picture Compression Standard, Communications of the ACM, Vol. 34, No. 4, S. 31-44, April 1991

[3] ITU-T H.261, International Telecommunication Union, 1996

[4] Ming Liou, Overview of the px64 kbit/s Video Coding Standard, Communications of the ACM, Vol. 34, No. 4, S. 60-63, April 1991

[5] A. N. Netravali und J.D. Robbins, Motion Compensated Television Coding: Part I, Bell System Technical Journal, Vol. 58, S. 631-690, März 1979)

[6] ISO/IEC JTC1/SC29/WG11, MPEG-4 Video Verification Model Version 5.0 Doc. 1469, S. 55 - 59, Nov. 1996

[7] H. Sun, Architectures for MPEG Compressed Bitstream Scaling, IEEE Transactions on Circuits and Systems for Video Technology, Vol. 6, No. 2, S. 191 - 199, April 1996

[8] A. Jain, Image Data Compression: A Review, Proceedings of the IEEE, Vol. 69, No. 3, S. 349 - 389, März 1981

## Patentansprüche

1. Verfahren zur Codierung eines digitalisierten Bildes mit Bildsegmenten, die Bildpunkts aufweisen, denen jeweils Codierungsinformation zugeordnet ist, unter Verwendung eines gespeicherten zeitlich vorangegangenen Bildes mit vorangegangenen Bildsegmenten, die vorangegangene Bildpunkte aufweisen, denen jeweils vorangegangene Codierungsinformation zugeordnet ist,

   - bei dem ein vorangegangenes Bildsegment ausgewählt wird abhängig von einem vorgegebenen Startvektor, mit dem eine örtliche Verschiebung eines Bildsegments zu dem vorangegangenen Bildsegment angegeben wird,
   - bei dem ein Fehlermaß zwischen Codierungsinformation des Bildsegments und vorangegangener Codierungsinformation des vorangegangenen Bildsegments gebildet wird,
   - wobei die Unterschiede der Codierungsinformation verschiedener Bildpunkte unterschiedlich gewichtet werden,

- bei dem überprüft wird, ob das Fehlermaß kleiner ist als ein erster Schwellenwert,
- bei dem für den Fall, daß das Fehlermaß kleiner ist als der erste Schwellenwert (S1), das Bildsegment keiner Restfehlercodierung unterzogen wird,
- bei dem sonst das Bildsegment der Restfehlercodierung und einer Entropiecodierung unterzogen wird.

2. Verfahren nach Anspruch 1,
   bei dem der Startvektor

   - ein Nullvektor,
   - ein prädizierter Vektor, der mittels einer Prädiktion für das Bildsegment ermittelt wird, oder
   - ein Bewegungsvektor, der mittels einer Bewegungsschätzung für das Bildsegment ermittelt wird, ist.

3. Verfahren nach Anspruch 1 oder 2, bei dem für den Fall, daß das Fehlermaß kleiner ist als der erste Schwellenwert, folgende Schritte durchgeführt werden:

   - für das Bildsegment wird mindestens ein weiteres Fehlermaß zwischen dem Bildsegment und dem vorangegangenen Bildsegment gebildet,
   - für den Fall, daß das zweite Fehlermaß kleiner ist als ein zweiter Schwellenwert (S2), wird das Bildsegment keiner Restfehlerccdierung unterzogen,
   - sonst wird das Bildsegment der Restfehlercodierung und einer Entropiecodierung unterzogen.

4. Verfahren nach einem der Ansprüche 1 bis 3,
   bei dem bei der Restfehlercodierung das Bildsegment einer Quantisierung unterzogen wird.

5. Verfahren nach einem der Ansprüche 1 bis 4,
   bei dem mindestens einer der Schwellenwerte adaptiv ausgestaltet ist.

6. Verfahren nach Anspruch 4,
   bei dem mindestens einer der Schwellenwerte abhängig von einem Quantisierungsparameter adaptiv ausgestaltet ist.

7. Verfahren nach einem der Ansprüche 3 bis 6,
   bei dem als weiteres Fehlermaß mindestens eines der folgenden Kriterien verwendet wird:

   - der Unterschied der Farbinformation der Bildpunkte des Bildsegments und der Farbinformation der vorangegangenen Bildpunkte des vorangegangenen Bildsegments,
   - der Unterschied der Luminanzinformation der Bildpunkte des Bildsegments und der Luminanzinformation der vorangegangenen Bildpunkte des vorangegangenen Bildsegments,
   - eine örtliche Ausdehnung des Unterschieds der Codierungsinformation der Bildpunkte des Bildsegments und der Codierungsinformation der vorangegangenen Bildpunkte des vorangegangenen Bildsegments.

8. Verfahren nach Anspruch 7,

   - bei dem zur Ermittlung der örtlichen Ausdehnung des Unterschieds der Codierungsinformation der Bildpunkte des Bildsegments und der Codierungsinformation der vorangegangenen Bildpunkte des vorangegangenen Bildsegments mindestens einmal überprüft wird, ob der Unterschied der Codierungsinformation bei mehr Bildpunkten als eine erste Anzahl (n1) größer ist als ein dritter Schwellenwert (T1),
   - bei dem das Bildsegment der Restfehlarcodierung und der Entropiecodierung unterzogen wird, wenn der Unterschied der Codierungsinformation bei mehr Bildpunkten als der ersten Anzahl (n1) größer ist als der dritte Schwellenwert (T1).

9. Verfahren nach Anspruch 8,

   - bei dem zur Ermittlung der örtlichen Ausdehnung des Unterschieds der Codierungsinformation in mehreren Schritten überprüft wird, ob der Unterschied der Codierungsinformation bei mehr Bildpunkten als jeweils eine weitere Anzahl (nk) größer ist als jeweils ein weiterer Schwellenwert (Tk),
   - bei dem das Bildsegment der Restfehlercodierung und der Entropiecodierung unterzogen wird, wenn der Unterschied der Codierungsinformation bei mehr Bildpunkten als einer weiteren Anzahl (nk) größer ist als der weitere Schwellenwert (Tk).

10. Verfahren nach Anspruch 8 oder 9,
bei dem mindestens eine der Anzahlen und/oder mindestens einer der Schwellenwerte adaptiv ausgestaltet ist/ sind.

11. Verfahren nach Anspruch 8 oder 9,
bei dem mindestens eine der Anzahlen und/oder der dritte Schwellenwert (T1) und/oder weitere Schwellenwerte (Tk) abhängig von einem Quantisierungsparameter adaptiv ausgestaltet ist/sind.

12. Verfahren nach einem der Ansprüche 1 bis 11,
bei dem das weitere Fehlermaß derart ermittelt wird, daß die Unterschiede der Codierungsinformation verschiedener Bildpunkte unterschiedlich gewichtet werden.

13. Verfahren nach einem der Ansprüche 1 bis 12,
bei dem die Gewichtung derart erfolgt, daß Unterschiede von Codierungsinformation von Bildpunkten, die sich in einem Randgebiet vorgebbarer Größe eines Bildsegments befinden, höher gewichtet werden als Unterschiede von Codierungsinformation von Bildpunkten außerhalb des Randgebiets.

14. Vorrichtung zur Codierung eines digitalisierten Bildes mit Bildsegmenten, die Bildpunkte aufweisen, denen jeweils Codierungsinformation zugeordnet ist, unter Verwendung eines gespeicherten zeitlich vorangegangenen Bildes mit vorangegangenen Bildsegmenten, die vorangegangene Bildpunkte aufweisen, denen jeweils vorangegangene Codierungsinformation zugeordnet ist,
mit einer Prozessoreinheit, die derart eingerichtet ist, daß

- ein vorangegangenes Bildsegment ausgewählt wird abhängig von einem vorgegebenen Startvektor, mit dem eine örtliche Verschiebung eines Bildsegments zu dem vorangegangenen Bildsegment angegeben wird,
- ein Fehlermaß zwischen Codierungsinformation des Bildsegments und vorangegangener Codierungsinformation des vorangegangenen Bildsegments gebildet wird,
- wobei die Unterschiede der Codierungsinformation verschiedener Bildpunkte unterschiedlich gewichtet werden,
- überprüft wird, ob das Fehlermaß kleiner ist als ein erster Schwellenwert,
- für den Fall, daß das Fehlermaß kleiner ist als der erste Schwellenwert (S1), das Bildsegment keiner Restfehlercodierung unterzogen wird,
- sonst das Bildsegment der Restrehlercodierung und einer Entropiecodierung unterzogen wird.

15. Vorrichtung nach Anspruch 14,
bei der die Prozessoreinheit derart eingerichtet ist, daß der Startvektor

- ein Nullvektor,
- ein prädizierter Vektor, der mittels einer Prädiktion für das Bildsegment ermittelt wird, oder
- ein Bewegungsvektor, der mittels einer Bewegungsschätzung für das Bildsegment ermittelt wird, ist.

16. Vorrichtung nach Anspruch 14 oder 15,
bei der die Prozessoreinheit derart eingerichtet ist, daß für den Fall, daß das Fehlermaß kleiner ist als der erste Schwellenwert, folgende Schritte durchgeführt werden:

- für das Bildsegment wird mindestens ein weiteres Fehlermaß zwischen dem Bildsegment und dem vorangegangenen Bildsegment gebildet,
- für den Fall, daß das zweite Fehlermaß kleiner ist als ein zweiter Schwellenwert (S2), wird das Bildsegment keiner Restfehlercodierung unterzogen,
- sonst wird das Bildsegment der Restfehlercodierung und einer Entropiecodierung unterzogen.

17. Vorrichtung nach einem der Ansprüche 14 bis 16,
bei der die Prozessoreinheit derart eingerichtet ist, daß bei der Restfehlercodierung das Bildsegment einer Quantisierung unterzogen wird.

18. Vorrichtung nach einem der Ansprüche 14 bis 17,

bei der die Prozessoreinheit derart eingerichtet ist, daß mindestens einer der Schwellenwerte adaptiv ausgestaltet ist.

19. Vorrichtung nach Anspruch 17,
bei der die Prozessoreinheit derart eingerichtet ist, daß mindestens einer der Schwellenwerte abhängig von einem Quantisierungsparameter adaptiv ausgestaltet ist.

20. Vorrichtung nach einem der Ansprüche 16 bis 19,
bei der die Prozessoreinheit derart eingerichtet ist, daß als weiteres Fehlermaß mindestens eines der folgenden Kriterien verwendet wird:

- der Unterschied der Farbinformation der Bildpunkte des Bildsegments und der Farbinformation der vorangegangenen Bildpunkte des vorangegangenen Bildsegments,
- der Unterschied der Luminanzinformation der Bildpunkte des Bildsegments und der Luminanzinformation der vorangegangenen Bildpunkte des vorangegangenen Bildsegments,
- eine örtliche Ausdehnung des Unterschieds der Codierungsinformation der Bildpunkte des Bildsegments und der Codierungsinformation der vorangegangeren Bildpunkte des vorangegangenen Bildsegments.

21. Vorrichtung nach Anspruch 20,
bei der die Prozessoreinheit derart eingerichtet ist, daß

- zur Ermittlung der örtlichen Ausdehnung des Unterschieds der Codierungsinformation der Bildpunkte des Bildsegments und der Codierungsinformation der vorangegangenen Bildpunkte des vorangegangenen Bildsegments mindestens einmal überprüft wird, ob der Unterschied der Codierungsinformation bei mehr Bildpunkten als eine erste Anzahl (n1) größer ist als ein dritter Schwellenwert (T1),
- das Bildsegment der Restfehlercodierung und der Entropiecodierung unterzogen wird, wenn der Unterschied der Codierungsinformation bei mehr Bildpunkten als der ersten Anzahl (n1) größer ist als der dritte Schwellenwert (T1).

22. Vorrichtung nach Anspruch 21,
bei der die Prozessoreinheit derart eingerichtet ist, daß

- zur Ermittlung der örtlichen Ausdehnung des Unterschieds der Codierungsinformation in mehreren Schritten überprüft wird, ob der Unterschied der Codierungsinformation bei mehr Bildpunkten als jeweils eine weitere Anzahl (ni) größer ist als jeweils ein weiterer Schwellenwert (Si),
- das Bildsegment der Restfehlercodierung und der Entropiecodierung unterzogen wird, wenn der Unterschied der Codierungsinformation bei mehr Bildpunkten als einer weiteren Anzahl (nk) größer ist als der weitere Schwellenwert (Tk).

23. Vorrichtung nach Anspruch 21 oder 22,
bei der die Prozessoreinheit derart eingerichtet ist, daß mindestens eine der Anzahlen und/oder mindestens einer der Schwellenwerte adaptiv ausgestaltet ist/sind.

24. Vorrichtung nach Anspruch 21 oder 22,
bei der die Prozessoreinheit derart eingerichtet ist, daß mindestens eine der Anzahlen und/oder der dritte Schwellenwert (T1) und/oder weitere Schwellenwerte (Tk) abhängig von einem Quantisierungsparameter adaptiv ausgestaltet ist/sind.

25. Vorrichtung nach einem der Ansprüche 14 bis 24,
bei der die Prozessoreinheit derart eingerichtet ist, daß das zweite Fehlermaß derart ermittelt wird, daß die Unterschiede der Codierungsinformation verschiedener Bildpunkte unterschiedlich gewichtet werden.

26. Vorrichtung nach einem der Ansprüche 14 bis 25,
bei der die Prozessoreinheit derart eingerichtet ist, daß die Gewichtung derart erfolgt, daß Unterschiede von Codierungsinformation von Bildpunkten, die sich in einem Randgebiet vorgebbarer Größe eines Bildsegments befinden, höher gewichtet werden als Unterschiede von Codierungsinformation von Bildpunkten außerhalb des Randgebiets.

**EP 0 981 910 B1**

## Claims

**1.** Method for coding a digitized picture with picture segments which have pixels which are each assigned coding information, using a stored temporally preceding picture with preceding picture segments which have preceding pixels which are each assigned preceding coding information,

- in which a preceding picture segment is selected depending on a predetermined start vector, which specifies a local displacement of a picture segment with respect to the preceding picture segment,
- in which an error measure between coding information of the picture segment and preceding
- coding information of the preceding picture segment is formed,
- the differences in the coding information of different pixels being weighted differently,
- in which a check is made to determine whether the error measure is smaller than a first threshold value,
- in which, for the case where the error measure is smaller than the first threshold value (S1), the picture segment is not subjected to residual error coding,
- in which otherwise the picture segment is subjected to residual error coding and to entropy coding.

**2.** Method according to Claim 1, in which the start vector is

- a zero vector,
- a predicted vector which is determined by means of a prediction for the picture segment, or
- a motion vector which is determined by means of a motion estimation for the picture segment.

**3.** Method according to Claim 1 or 2, in which, for the case where the error measure is smaller than the first threshold value, the following steps are carried out:

- at least one further error measure between the picture segment and the preceding picture segment is formed for the picture segment,
- for the case where the second error measure is smaller than a second threshold value (S2), the picture segment is not subjected to residual error coding,
- otherwise the picture segment is subjected to residual error coding and to entropy coding.

**4.** Method according to one of Claims 1 to 3, in which, during the residual error coding, the picture segment is subjected to quantization.

**5.** Method according to one of Claims 1 to 4, in which at least one of the threshold values is configured to be adaptive.

**6.** Method according to Claim 4, in which at least one of the threshold values is configured to be adaptive depending on a quantization parameter.

**7.** Method according to one of Claims 3 to 6, in which at least one of the following criteria is used as the further error measure:

- the difference between the colour information of the pixels of the picture segment, and the colour information of the preceding pixels of the preceding picture segment,
- the difference between the luminance information of the pixels of the picture segment and the luminance information of the preceding pixels of the preceding picture segment,
- a local extent of the difference between the coding information of the pixels of the picture segment and the coding information of the preceding pixels of the preceding picture segment.

**8.** Method according to Claim 7,

- in which, for determining the local extent of the difference between the coding information of the pixels of the picture segment and the coding information of the preceding pixels of the preceding picture segment, a check is made at least once to determine whether the difference in the coding information is greater than a third threshold value (T1) at more pixels than a first number (n1),

- in which the picture segment is subjected to residual error coding and entropy coding if the difference in the coding information is greater than the third threshold value (T1) at more pixels than the first number (n1).

9. Method according to Claim 8,

    - in which, for determining the local extent of the difference in the coding information, a check is made in a plurality of steps to determine whether the difference in the coding information is greater than a respective further threshold value (Tk) at more pixels than a respective further number (nk),
    - in which the picture segment is subjected to residual error coding and entropy coding if the difference in the coding information is greater than the further threshold value (Tk) at more pixels than a further number (nk).

10. Method according to Claim 8 or 9,
    in which at least one of the numbers and/or at least one of the threshold values are/is configured to be adaptive.

11. Method according to Claim 8 or 9,
    in which at least one of the numbers and/or the third threshold value (T1) and/or further threshold values (Tk) are/is configured to be adaptive depending on a quantization parameter.

12. Method according to one of Claims 1 to 11,
    in which the further error measure is determined in such a way that the differences in the coding information of different pixels are weighted differently.

13. Method according to one of Claims 1 to 12,
    in which the weighting is effected in such a way that differences of coding information of pixels which are situated in an edge region of predeterminable size of a picture segment are weighted more highly than differences of coding information of pixels outside the edge region.

14. Apparatus for coding a digitized picture with picture segments which have pixels which are each assigned coding information, using a stored temporally preceding picture with preceding picture segments which have preceding pixels which are each assigned preceding coding information, having a processor unit which is set up in such a way that

    - a preceding picture segment is selected depending on a predetermined start vector, which specifies a local displacement of a picture segment with respect to the preceding picture segment,
    - an error measure between coding information of the picture segment and preceding coding information of the preceding picture segment is formed,
    - the differences in the coding information of different pixels being weighted differently,
    - a check is made to determine whether the error measure is smaller than a first threshold value,
    - for the case where the error measure is smaller than the first threshold value (S1), the picture segment is not subjected to residual error coding,
    - otherwise the picture segment is subjected to residual error coding and to entropy coding.

15. Apparatus according to Claim 14,
    in which the processor unit is set up in such a way that the start vector is

    - a zero vector,
    - a predicted vector which is determined by means of a prediction for the picture segment, or
    - a motion vector which is determined by means of a motion estimation for the picture segment.

16. Apparatus according to Claim 14 or 15,
    in which the processor unit is set up in such a way that, for the case where the error measure is smaller than the first threshold value, the following steps are carried out:

    - at least one further error measure between the picture segment and the preceding picture segment is formed for the picture segment,
    - for the case where the second error measure is smaller than a second threshold value (S2), the picture segment is not subjected to residual error coding,
    - otherwise the picture segment is subjected to residual error coding and to entropy coding.

**17.** Apparatus according to one of Claims 14 to 16,
in which the processor unit is set up in such a way that, during the residual error coding, the picture segment is subjected to quantization.

**18.** Apparatus according to one of Claims 14 to 17,
in which the processor unit is set up in such a way that at least one of the threshold values is configured to be adaptive.

**19.** Apparatus according to Claim 17,
in which the processor unit is set up in such a way that at least one of the threshold values is configured to be adaptive depending on a quantization parameter.

**20.** Apparatus according to one of Claims 16 to 19,
in which the processor unit is set up in such a way that at least one of the following criteria is used as the further error measure:

- the difference between the colour information of the pixels of the picture segment, and the colour information of the preceding pixels of the preceding picture segment,
- the difference between the luminance information of the pixels of the picture segment and the luminance information of the preceding pixels of the preceding picture segment,
- a local extent of the difference between the coding information of the pixels of the picture segment and the coding information of the preceding pixels of the preceding picture segment.

**21.** Apparatus according to Claim 20,
in which the processor unit is set up in such a way that

- for determining the local extent of the difference between the coding information of the pixels of the picture segment and the coding information of the preceding pixels of the preceding picture segment, a check is made at least once to determine whether the difference in the coding information is greater than a third threshold value (T1) at more pixels than a first number (n1),
- the picture segment is subjected to residual error coding and entropy coding if the difference in the coding information is greater than the third threshold value (T1) at more pixels than the first number (n1).

**22.** Apparatus according to Claim 21,
in which the processor unit is set up in such a way that

- for determining the local extent of the difference in the coding information, a check is made in a plurality of steps to determine whether the difference in the coding information is greater than a respective further threshold value (Si) at more pixels than a respective further number (ni),
- the picture segment is subjected to residual error coding and entropy coding if the difference in the coding information is greater than the further threshold value (Tk) at more pixels than a further number (nk).

**23.** Apparatus according to Claim 21 or 22,
in which the processor unit is set up in such a way that at least one of the numbers and/or at least one of the threshold values are/is configured to be adaptive.

**24.** Apparatus according to Claim 21 or 22,
in which the processor unit is set up in such a way that at least one of the numbers and/or the third threshold value (T1) and/or further threshold values (Tk) are/is configured to be adaptive depending on a quantization parameter.

**25.** Apparatus according to one of Claims 14 to 24,
in which the processor unit is set up in such a way that the second error measure is determined in such a way that the differences in the coding information of different pixels are weighted differently.

**26.** Apparatus according to one of Claims 14 to 25,
in which the processor is set up in such a way that the weighting is effected in such a way that differences of coding information of pixels which are situated in an edge region of predeterminable size of a picture segment are weighted more highly than differences of coding information of pixels outside the edge region.

**Revendications**

1. Procédé pour coder une image numérisée comportant des segments d'image, qui comportent des points d'image au, auxquels est associée respectivement une information de codage, moyennant l'utilisation d'une image précédente dans le temps, mémorisée, comportant des segments d'image précédents, qui comportent des points d'image précédents, auxquels est associée une information de codage respectivement précédente,

   - selon lequel un segment d'image précédent est sélectionné en fonction d'un vecteur de départ prédéterminé, avec lequel une translation locale d'un segment d'image vers le segment d'image précédent est indiqué,
   - selon lequel une valeur d'erreur est formée entre l'information de codage du segment d'image et l'information de codage précédente du segment d'image précédent,
   - les différences entre les informations de codage de différents points d'image étant pondérées différemment;
   - selon lequel un contrôle est effectué pour déterminer si la valeur d'erreur est inférieure à une première valeur de seuil;
   - selon lequel dans le cas où la valeur d'erreur est inférieure à la première valeur de seuil (S1), le segment d'image n'est soumis à aucun codage d'image résiduel,
   - selon lequel sinon, le segment d'image est soumis au codage d'erreur résiduelle et à un codage à entropie.

2. Procédé selon la revendication 1, dans lequel le vecteur de départ est

   - un vecteur nul,
   - un vecteur prédit, qui est déterminé au moyen d'une prédiction pour le segment d'image; ou
   - un vecteur de déplacement, qui est déterminé au moyen d'une estimation de déplacement pour le segment d'image.

3. Procédé selon la revendication 1 ou 2, selon lequel dans le cas où la valeur d'erreur est inférieure à la première valeur de seuil, on met en oeuvre les étapes suivantes:

   - pour le segment d'image, au moins une autre valeur d'erreur entre le segment d'image et le segment d'image précédent est formée,
   - dans le cas où la seconde valeur d'erreur est inférieure à une seconde valeur de seuil (S2), le segment d'image est soumis à aucun codage d'erreur résiduelle,
   - sinon le segment d'image est soumis au codage d'erreur résiduelle et à un codage à entropie.

4. Procédé selon l'une des revendications 1 à 3, selon lequel lors du codage d'erreur résiduelle, le segment d'image est soumis à une quantification.

5. Procédé selon l'une des revendications 1 à 4, selon lequel au moins l'une des valeurs de seuil est conçue de manière à être adaptative.

6. Procédé selon la revendication 4, dans lequel au moins l'une des valeurs de seuil est conçue de manière à être adaptative en fonction d'un paramètre de quantification.

7. Procédé selon l'une des revendications 3 à 6, selon lequel on utilise comme autre valeur d'erreur, au moins l'un des critères suivants:

   - la différence entre l'information de couleur des points d'image du segment d'image et l'information de couleur des points d'image précédent du segment d'image précédent,
   - la différence entre l'information de luminance des points d'image du segment d'image et l'information de luminance des points d'image précédents du segment d'image précédent,
   - une étendue locale de la différence entre l'information de codage des points d'image du segment d'image et l'information de codage des points d'image précédents du segment d'image précédent.

8. Procédé selon la revendication 7,

   - dans lequel, pour déterminer l'étendue locale de la différence entre l'information de codage des points d'image du segment d'image et l'information de codage des points d'image précédents du segment d'image précédent, on vérifie au moins une fois si la différence des informations de codage pour un nombre de points d'image supérieur à un premier nombre (n1) est supérieure à une troisième valeur de seuil (T1),

- selon lequel le segment d'image est soumis au codage d'erreur résiduelle et au codage à entropie lorsque la différence des informations de codage dans le cas d'un nombre de points d'image supérieur au premier nombre (ni) est supérieur à la troisième valeur de seuil (T1).

**9.** Procédé selon la revendication 8,

- selon lequel pour la détermination de l'étendue locale de la différence des informations de codage, on vérifie en plusieurs étapes si la différence entre les informations de codage pour un nombre de points d'image supérieur respectivement à un autre nombre (nk) est supérieure à respectivement une autre valeur de seuil (Tk),
- selon lequel le segment d'image est soumis au codage d'erreur résiduelle et au codage à entropie lorsque la différence entre les informations d'image pour un nombre de points d'image supérieur à un autre nombre (nk) est supérieur à l'autre valeur de seuil (Tk).

**10.** Procédé selon la revendication 8 ou 9, selon lequel au moins l'un des nombres et/ou au moins l'une des valeurs de seuil sont conçus de manière à être adaptatifs.

**11.** Procédé selon la revendication 8 ou 9, selon lequel au moins l'un des nombres et/ou la troisième valeur de seuil (T1) et/ou d'autres valeurs de seul (Tk) sont agencés de manière à être adaptatifs, en fonction d'un paramètre de quantification.

**12.** Procédé selon l'une des revendications 1 à 11, dans lequel l'autre valeur d'erreur est déterminée de telle sorte que les différences entre les informations de codage de différents points d'image sont pondérées différemment.

**13.** Procédé selon l'une des revendications 1 à 12, selon lequel la pondération s'effectue de telle sorte que des différences entre des informations de codage de points d'image, qui sont situées dans une zone marginale de taille pouvant être prédéterminée d'un segment d'image, sont pondérées à un degré plus important avec une pondération plus élevée que des différences entre des informations de codage de points d'image situés à l'extérieure de la zone marginale.

**14.** Dispositif pour coder une image numérisée comportant des segments de données, qui comportent des points d'image au, auxquels est associée respectivement une information de codage, moyennant l'utilisation d'une image précédente dans le temps, mémorisée, comportant des segments d'images précédents, qui comportent des points d'image précédents, auxquels est associée une information de codage respectivement précédente,

- comportant une unité formant processeur qui est agencée de telle sorte qu'un segment d'image précédent est sélectionné en fonction d'un vecteur de départ prédéterminé, avec lequel une translation locale d'un segment d'image vers le segment d'image précédent est indiqué,
- une valeur d'erreur est formée entre l'information de codage du segment d'image et l'information de codage précédente du segment d'image précédent,
- les différences entre les informations de codage de différents points d'image étant pondérés différemment;
- un contrôle est effectué pour déterminer si la valeur d'erreur est inférieure à une première valeur de seuil;
- dans le cas où la valeur d'erreur est inférieur à la première valeur de seuil (S1), le segment d'image n'est soumis à aucun codage d'image résiduel,
- sinon, le segment d'image est soumis au codage d'erreur résiduelle et à un codage à entropie.

**15.** Dispositif selon la revendication 14, dans lequel l'unité formant processeur est agencée de telle sorte que le vecteur de départ est

- un vecteur nul,
- un vecteur prédit, qui est déterminé au moyen d'une prédiction pour le segment d'image; ou
- un vecteur de déplacement, qui est déterminé au moyen d'une estimation de déplacement pour le segment d'image.

**16.** Dispositif selon la revendication 14 ou 15, dans lequel l'unité formant processeur est agencée de telle sorte que dans le cas où la valeur d'erreur est inférieure à la première valeur de seuil, on met en oeuvre les étapes suivantes:

- pour le segment d'image, au moins une autre valeur d'erreur entre le segment d'image et le segment d'image précédent est formée,

- dans le cas où la seconde valeur d'erreur est inférieure à une seconde valeur de seuil (S2), le segment d'image n'est soumis à aucun codage d'erreur résiduelle,
- sinon le segment d'image est soumis au codage d'erreur résiduelle et à un codage à entropie.

17. Dispositif selon l'une des revendications 14 à 16, dans lequel l'unité formant processeur est agencée de telle sorte que lors du codage d'erreur résiduelle, le segment d'image est soumis à une quantification.

18. Dispositif selon l'une des revendications 14 à 17, dans lequel l'unité formant processeur est agencée de telle sorte qu'au moins l'une des valeurs de seuil est conçue de manière à être adaptative.

19. Dispositif selon la revendications 17, dans lequel l'unité formant processeur est agencée de telle sorte qu'au moins l'une des valeurs de seuil est conçue de manière à être adaptative en fonction d'un paramètre de quantification.

20. Dispositif selon l'une des revendications 16 à 19, dans lequel l'unité formant processeur est agencée de telle sorte qu'on utilise comme autre valeur d'erreur, au moins l'un des critères suivants:

- la différence entre l'information de couleur des points d'image du segment d'image et l'information de couleur des points d'image précédent du segment d'image précédent,
- la différence entre l'information de luminance des points d'image du segment d'image et l'information de luminance des points d'image précédents du segment d'image précédent,
- une étendue locale de la différence entre l'information de codage des points d'image du segment d'image et l'information de codage des points d'image précédents du segment d'image précédent.

21. Dispositif selon la revendication 20, dans lequel l'unité formant processeur est agencée de telle sorte que

- pour déterminer l'étendue locale de la différence entre l'information de codage des points d'image du segment d'image et l'information de codage des points d'image précédents du segment d'image précédent, on vérifie au moins une fois si la différence des informations de codage pour un nombre de points d'image supérieur à un premier nombre (n1) est supérieure à une troisième valeur de seuil (T1),
- le segment d'image du codage d'erreur résiduelle et le codage à entropie est soumis au codage d'erreur résiduelle et au codage à entropie lorsque la différence des informations de codage dans le cas d'un nombre de points d'image supérieur au premier nombre (n1) est supérieur à la troisième valeur de seuil (T1).

22. Dispositif selon la revendication 21, dans l'unité formant processeur est agencée de telle sorte que

- pour la détermination de l'étendue locale de la différence de l'information de codage, on vérifie en plusieurs étapes si la différence entre les informations de codage pour un nombre de points d'image supérieur respectivement à un autre nombre (nk), est supérieure à respectivement une autre valeur de seuil (Tk),
- le segment d'image est soumis au codage d'erreur résiduelle et au codage à entropie lorsque la différence entre les informations d'image pour un nombre de points d'image supérieur à un autre nombre (ni) est supérieure à d'autres valeurs de seuil (Si).

23. Dispositif selon la revendication 21 ou 22, selon lequel dans l'unité formant processeur est agencée de telle sorte qu'au moins l'un des nombres et/ou au moins l'une des valeurs de seuil sont conçus de manière à être adaptatifs.

24. Dispositif selon la revendication 21 ou 22, dans lequel l'unité formant processeur est agencée de telle sorte qu'au moins l'un des nombres et/ou la troisième valeur de seuil (T1) et/ou d'autres valeurs de seuil (Tk) sont agencés de manière à être adaptatifs, en fonction d'un paramètre de quantification.

25. Dispositif selon l'une des revendications 14 à 24, dans lequel l'unité formant processeur est agencée de telle sorte que la deuxième valeur d'erreur est déterminée de telle sorte que les différences entre les informations de codage de différents points d'image sont pondérées différemment.

26. Dispositif selon l'une des revendications 14 à 25, dans lequel l'unité formant processeur est agencée de telle sorte que la pondération s'effectue de telle sorte que des différences entre des informations de codage de points d'image, qui sont situées dans une zone marginale de taille pouvant être prédéterminée d'un segment d'image, sont pondérées à un degré plus important avec une pondération plus élevée que des différences entre des informations de codage de points d'image situés à l'extérieure de la zone marginale.

# FIG 1

Für jeden Makroblock oder Bildblock — 600

Ermittlung des Bewegungsvektors mittels Bewegungsschätzung — 101

Zuordnung des Bewegungsvektors zu Makroblock bzw. Bildblock — 102

Speicherung des Bewegungsvektors — 103

Bildung eines Fehlermaßes F — 602

604 — F < S1? — 603

Ja / Nein — 607

701 — Bildung eines weiteren Fehlermaßes F2

702 — F2 < S2? — 709

703 — Ja / Nein

704 — w > n1 ?

709 — 609

705 — N ? J — 710

wk < nk? — 609

609

708 — N 706 J — 707

606 / 609 / 610 — 610

610

# FIG 2

EP 0 981 910 B1

FIG 3

EP 0 981 910 B1

# FIG 4

EP 0 981 910 B1

# FIG 5

EP 0 981 910 B1

# FIG 6

| Für jeden Bildblock oder Makroblock | | 600 |
|---|---|---|
| Auswahl eines Gebietes innerhalb des vorangegangenen Bildes, das sich an der gleichen relativen Posistion innerhalb des vorangegangenen Bildes befindet wie der Makroblock bzw. Bildblock; das Gebiet weist die gleiche Größe und Form auf wie der Makroblock bzw. Bildblock | | 601 |
| Bildung des Fehlermaßes zwischen Makroblock bzw. Bildblock und dem ausge-wählten Gebiet | | 602 |
| Fehlermaß < erster Stellenwert? | | 603 |
| Ja (604) | Nein (607) | |
| keine Bewegungsschätzung (605) | Bewegungsschätzung (608) | |
| keine Transformationscodierung (606) | Transformationscodierung (609) | |
| | Quantisierung, Entropiecodierung (610) | |

EP 0 981 910 B1

**FIG 7**

EP 0 981 910 B1

Für jeden Makroblock oder Bildblock — 600

Auswahl eines Gebiets innerhalb des vorangegangenen Bildes, das sich an der gleichen Position innerhalb des vorangegangenen Bildes befindet wie der Makroblock bzw. der Bildblock; das Gebiet weist die gleiche Größe und Form auf wie der Makroblock bzw. Bildblock — 601

Bildung des Fehlermaßes zwischen Makroblock bzw. Bildblock und dem ausgewählten Gebiet — 602

Fehlermaß < erster Stellenwert? — 602 / 603

604 — Ja          Nein

701 — Bildung eines weiteren Fehlermaßes F2 — 607

F2 < S2? — 702

703 — Ja          Nein          608

704 — w > n1 ?          N          J          608          609

705 — wk > nk?          ⋮          707 ⋮

708 — N          706          J          608          609

605 | 608          609
606 | 609          610
| 610 | 610          610